# EUROPEAN PATENT SPECIFICATION

(11) **EP 2 524 933 B1**
(45) Date of publication and mention of the grant of the patent: **07.09.2016**
(21) Application number: 11732971.4
(22) Date of filing: 14.01.2011
(51) Int. Cl.: C08K 5/07, C08F 299/00, C08F 290/04, C08F 2/50, C08K 5/5397, C08L 15/00

(54) **PHOTOCURABLE RESIN COMPOSITION AND LIGHT-EMITTING ELEMENT SEALANT**
LICHTHÄRTBARE HARZZUSAMMENSETZUNG UND DICHTUNGSMITTEL FÜR EIN LICHTEMITTIERENDES ELEMENT
COMPOSITION DE RESINE PHOTODURCISSABLE ET PRODUIT D'ETANCHEITE D'ELEMENT ELECTROLUMINESCENT

(30) Priority: 15.01.2010 JP 2010006747
(43) Date of publication of application: 21.11.2012
(73) Proprietor: Bridgestone Corporation, Tokyo 104-8340 (JP)
(72) Inventor: KURATA, Toshihiko, Yokohama-shi Kanagawa 244-8510 (JP); OOMORI, Naoyuki, Yokohama-shi Kanagawa 244-8510 (JP); ATAMI, Kiyohiko, Yokohama-shi Kanagawa 244-8510 (JP)
(74) Representative: Oxley, Robin John George
(86) International application number: PCT/JP2011/050578
(87) International publication number: WO 2011/087101

(56) References cited:
- EP-A1- 1 670 292
- WO-A1-97/44363
- JP-A- 2002 156 498
- JP-A- 2005 129 520
- JP-A- 2008 195 792
- JP-A- 2008 291 127
- DATABASE WPI Week 200866 Thomson Scientific, London, GB; AN 2008-L26113 XP002727123, & JP 2008 195792 A (BRIDGESTONE CORP) 28 August 2008 (2008-08-28)
- DATABASE WPI Week 200882 Thomson Scientific, London, GB; AN 2008-O11854 XP002727124, & JP 2008 291127 A (BRIDGESTONE CORP) 4 December 2008 (2008-12-04)
- DATABASE WPI Week 198923 Thomson Scientific, London, GB; AN 1989-170541 XP002727125, & JP H01 113417 A (MATSUSHITA ELECTRIC WORKS LTD) 2 May 1989 (1989-05-02)

## Description

### BACKGROUND OF THE INVENTION

The present invention relates to a photocurable resin composition and a light-emitting element sealant prepared by using the above photocurable resin composition.

### RELATED ART

Sealants for electronic displays such as organic electroluminescence devices, inorganic electroluminescence devices and sealants for back lights of electronic devices such as portable phones in which LED is used, digital video cameras, PDA and display parts in large-sized displays, road indicators and ordinary lighting equipments are required to protect them from impact from outsides, dusts, moisture and have effects of enhancing a light extraction efficiency , and development of materials therefor is promoted.

Thermosetting epoxy resins (refer to a patent document 1), thermosetting silicone resins (refer to a patent document 2) and UV ray-curable urethane resins (refer to a patent document 3) have so far been used as sealants, and it has so far been investigated to make use of them as sealants for light-emitting elements.

### Patent documents:

Patent document 1: Japanese Patent Application Laid-Open No. 169666/2000
Patent document 2: Japanese Patent Application Laid-Open No. 225303/2002
Patent document 3: Japanese Patent Application Laid-Open No. 105311/2003

When the thermosetting epoxy resins described in the patent document 1 are used as a sealant for light-emitting elements, the problem that they do not endure use over a long period of time due to an unsatisfactory heat resistance is involved therein. When the thermosetting silicone resins described in the patent document 2 are used, the problem that they are unsatisfactory in an adhesive property and an flexibility and therefore lacking in a convenience is involved therein. Further, the thermosetting resins themselves involve the problem that they require a long time for curing to make the productivity inferior.

On the other hand, when the thermosetting urethane resins described in the patent document 3 are used as a sealant for light-emitting elements, time required for curing is shortened, and the productivity is enhanced. However, the heat resistance is not necessarily satisfactory, and the problem that discoloration due to heat is caused to exert an influence on the luminance is brought about in a certain case.

A sealant for light-emitting elements is required to have an optical transparency in addition to a heat resistance, and new materials which allow them to be consistent are required to be developed.

Accordingly, an object of the present invention is to provide a photocurable resin composition for a light-emitting element sealant which has a short time required for curing to make it possible to enhance the productivity and which provides a light-emitting element sealant having an excellent heat resistance and an excellent optical transparency and a light-emitting element sealant prepared by using the above photocurable resin composition.

Intense investigations repeated by the present inventors in order to achieve the object described above have resulted in finding that a photocurable resin composition comprising an end-modified hydrogenated styrene-butadiene rubber and a specific photopolymerization initiator in a specific proportion makes it possible to shorten time required for curing to enhance the productivity and provide a light-emitting element sealant which is excellent in both of a heat resistance and an optical transparency. JPH01113417 and JP2008291127 disclose photocurable resins for gaskets for electronic components and sealing electronic parts, respectively. EP1670292 discloses a sealing material for an organic electroluminescent device. JP2008162460 discloses a photocurable liquid resin composition for use as an adhesive in display materials, electronic parts and precision instruments.

That is, the present invention related to the following items [1] to [4].
[1] A photocurable resin composition for a light-emitting element sealant comprising
   100 parts by mass of an end-modified hydrogenated styrene-butadiene rubber (A) and
   0.1 to 13 parts by mass of a photopolymerisation initiator (B) comprising an α-hydroxyalkylphenone base photopolymerization initiator and/or an acylphosphine oxide base photopolymerization initiator of formula (III) 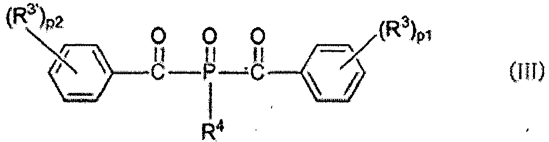 wherein R³ and R^{3'} each represent independently an alkyl group having 1 to 5 carbon atoms or an alkoxy group having 1 to 5 carbon atoms; R⁴ represents an alkyl group having 1 to 15 carbon atoms; p1 and p2 each represent independently an integer of 0 to 3.
[2] The photocurable resin composition according to the item [1] described above, wherein the end-modified hydrogenated styrene-butadiene rubber of the component (A) is a hydrogenated styrene-butadiene rubber having a (meth)acryloyloxy group at both ends of a molecule.
[3] The photocurable resin composition according to the item [1] or [2] described above, further comprising a (meth)acryl monomer and/or a polythiol compound as a reactive diluent (C).
[4] A light-emitting element sealant prepared by using the photocurable resin composition according to any of the items [1] to [3] described above.

The photocurable resin composition of the present invention provides a light-emitting element sealant which can be shortened in time required for curing and therefore enhanced in a productivity and which is excellent in a heat resistance and an optical transparency.

### [Photocurable resin composition]

The photocurable resin composition for a light-emitting element sealant of the present invention comprises
100 parts by mass of the end-modified hydrogenated styrene-butadiene rubber (A) and
0.1 to 13 parts by mass of a photopolymerisation initiator (B) comprising the α-hydroxyalkylphenone base photopolymerization initiator and/or the acylphosphine oxide base photopolymerization initiator of formula (III) 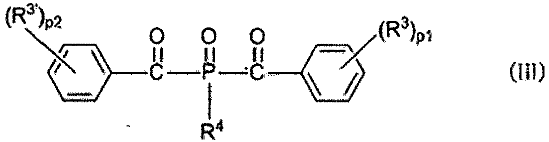 wherein R³ and R^{3'} each represent independently an alkyl group having 1 to 5 carbon atoms or an alkoxy group having 1 to 5 carbon atoms; R⁴ represents an alkyl group having 1 to 15 carbon atoms; p1 and p2 each represent independently an integer of 0 to 3.

### ((A) End-modified hydrogenated styrene-butadiene rubber)

The end-modified hydrogenated styrene-butadiene rubber which is the component (A) is preferably a hydrogenated styrene-butadiene rubber which is substituted with a photocurable functional group such as a (meth)acryloyl group at both ends thereof.

A production process for the above end-modified hydrogenated styrene-butadiene rubber shall not specifically be restricted, and it is preferably, for example, a process in which a non-modified hydrogenated styrene-butadiene rubber is reacted with ethylene oxide or propylene oxide to thereby introduce a hydroxyl group into a molecular end and in which it is further reacted with a compound having a photocurable functional group such as a (meth)acryloyl group.

Reaction with the compound having a photocurable functional group described above includes, for example, urethane reaction of a hydrogenated styrene-butadiene rubber in which a hydroxyl group is introduced into a molecular end with 2-(meth)acryloyloxyethyl isocyanate; transesterification of a hydrogenated styrene-butadiene rubber in which a hydroxyl group is introduced into a molecular end with lower alkyl (meth)acrylate such as methyl (meth)acrylate, ethyl (meth)acrylate, isopropyl (meth)acrylate; and reaction of 2-hydroxyethyl acrylate with a prepolymer obtained by reacting a hydrogenated styrene-butadiene rubber having a hydroxyl group introduced into a molecular end with an isocyanate compound, and the end-modified hydrogenated styrene-butadiene rubber can be obtained by the reactions described above.

A hydrogenated styrene-butadiene rubber having a (meth)acryloyloxy group at both ends of a molecule is preferably used as the end-modified hydrogenated styrene-butadiene rubber.

The non-modified hydrogenated styrene-butadiene rubber described above can be obtained by hydrogenating a styrene-butadiene rubber or a styrene-butadiene rubber in which a hydroxyl group is introduced into a molecular end. In this connection, the styrene-butadiene rubber of the raw material can be obtained by copolymerizing styrene and butadiene, and listed is, for example, a method in which styrene is copolymerized with 1,3-butadiene at 10 to 80°C under the presence of a publicly known dilithium compound such as naphthalenedilithium, dilithiumhexylbenzene and a solvent which is inactive to the reaction.

A method for hydrogenating the styrene-butadiene rubber or the styrene-butadiene rubber in which a hydroxyl group is introduced into a molecular end shall not specifically be restricted, and publicly known methods can be used. For example, a part or a whole of a conjugate diene part thereof can be hydrogenated by reacting the styrene-butadiene rubber at 50 to 180°C in a saturated hydrocarbon solution such as cyclohexane while applying pressure by hydrogen under the presence of a publicly known hydrogenation catalyst such as a heterogeneous catalyst prepared by carrying Raney nickel or Pt, Pd, Ru, Rh, Ni on a carrier such as carbon, alumina, diatomaceous earth; a Ziegler catalyst comprising combination of an organic metal compound comprising the 8th to 10th group metal such as nickel, cobalt with an organic aluminum compound such as triethylaluminum, triisobutylaluminum or an organic lithium compound; and a metallocene base catalyst comprising combination of a bis(cyclopentadienyl) compound of transition metal such as zirconium, hafnium with an organic metal compound of lithium, sodium, potassium, aluminum, zinc, magnesium.

A hydrogen addition rate of the styrene-butadiene rubber or the styrene-butadiene rubber in which a hydroxyl group is introduced into a molecular end shall not specifically be restricted, and it is preferably 80 to 100 %, more preferably 90 to 100 % from the viewpoint of the heat resistance.

A weight average molecular weight of the end-modified hydrogenated styrene-butadiene rubber is preferably 5,000 to 40,000, more preferably 10,000 to 30,000 and further preferably 15,000 to 20,000. In the present specification, the weight average molecular weight is a value determined by gel permeation chromatography (GPC) in terms of polystyrene based on monodispersed polystyrene.

Also, a molecular weight distribution (Mw/Mn) of the end-modified hydrogenated styrene-butadiene rubber is preferably 3 or less, more preferably 2 or less and further preferably 1.2 or less. If a weight average molecular weight of the end-modified hydrogenated styrene-butadiene rubber falls in the above ranges, a viscosity of the end-modified hydrogenated styrene-butadiene rubber is not elevated too much, and a handling property thereof is good. Also, if a molecular weight distribution thereof is 3 or less, the reproducibility is liable to be obtained in commercial production, and the copolymer having a molecular weight of the same level is readily obtained.

A content (hereinafter referred to as a styrene content) of a constitutional unit originating in styrene in the end-modified hydrogenated styrene-butadiene rubber shall not specifically be restricted, and it is preferably 10 to 40 % by mass, more preferably 10 to 30 % by mass based on the whole constitutional units.

### ((B) α-hydroxyalkylphenone base photopolymerization initiator and/or acylphosphine oxide base photopolymerization initiator)

The photocurable resin composition of the present invention contains an α-hydroxyalkylphenone base photopolymerization initiator and an acylphosphine oxide base photopolymerization initiator as the component (B).

The α-hydroxyalkylphenone base photopolymerization initiator is preferably a compound represented by the following Formula (I):

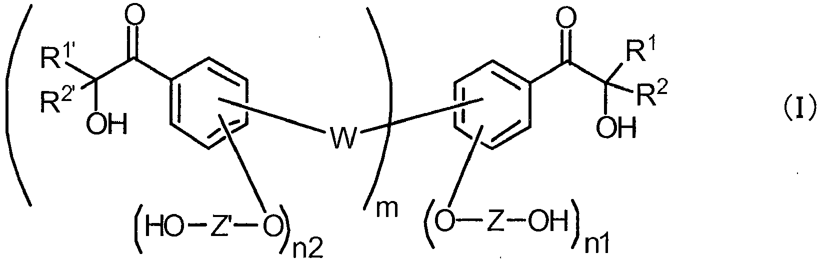

In Formula (I), R¹, R^{1'}, R² and R^{2'} each represent independently an alkyl group having 1 to 5 carbon atoms, or R¹ is put together with R², and R^{1'} is put together with R^{2'} to represent an alkylene group having 1 to 5 carbon atoms respectively; R¹ and R^{1'} and R² and R^{2'} may be the same as or different from each other; W, Z and Z' each represent independently an alkylene group having 1 to 5 carbon atoms; Z and Z' may be the same or different; m is 0 or 1; and n1 and n2 each represent independently 0 or 1.

The alkyl group having 1 to 5 carbon atoms each represented independently by R¹, R^{1'}, R² and R^{2'} includes methyl, ethyl, n-propyl, isopropyl, t-butyl. Among them, the alkyl group having 1 to 3 carbon atoms is preferred, and methyl is more preferred.

The alkylene group having 1 to 5 carbon atoms represented by putting together R¹ with R² and R^{1'} with R^{2'} includes methylene, ethylene, tetramethylene, pentamethylene. Among them, pentamethylene is preferred.

The alkylene group having 1 to 5 carbon atoms each represented independently by W, Z and Z' includes methylene, ethylene, trimethylene. W is preferably methylene. Z and Z' each are preferably methylene or ethylene, more preferably ethylene.

The preferred specific examples of the α-hydroxyalkylphenone base photopolymerization initiator represented by Formula (I) are shown below, but it shall not specifically be restricted to them:

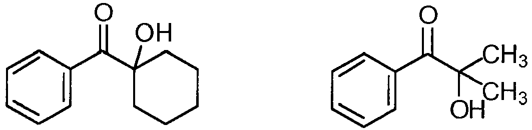

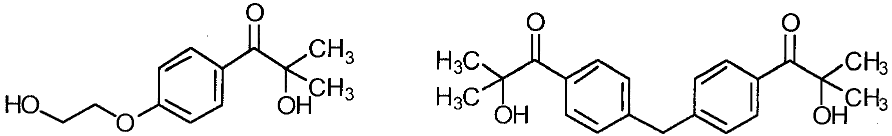

The acylphosphine oxide base photopolymerization initiator is a compound represented by the following Formula (III) :

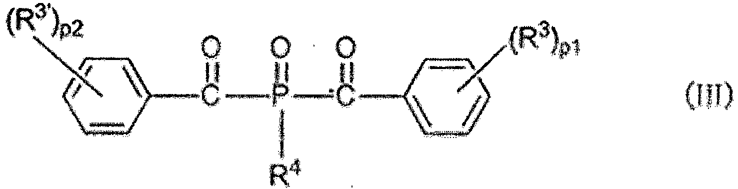

In the formula described above, R³ and R^{3'} each represent independently an alkyl group having 1 to 5 carbon atoms or an alkoxy group having 1 to 5 carbon atoms; R⁴ represents an alkyl group having 1 to 15 carbon atoms; p1 and p2 each represent independently an integer of 0 to 3.

The alkyl group having 1 to 5 carbon atoms each represented independently by R³ and R^{3'} includes methyl, ethyl, various propyls ("various" shows that they include linear and all branched propyls; hereinafter the same shall apply), various butyls. Among them, methyl is preferred. The alkoxy group having 1 to 5 carbon atoms each represented independently by R³ and R^{3'} includes methoxy, ethoxy. Among them, methoxy is preferred.

The alkyl group having 1 to 15 carbon atoms represented by R⁴ includes methyl, ethyl, various propyls, various butyls, various hexyls, various octyls, various dexyls, various dodecyls. Among them, the alkyl group having 1 to 10 carbon atoms is preferred, and the alkyl group having 4 to 10 carbon atoms is more preferred. The alkyl group having 5 to 8 carbon atoms is further preferred.

Further, in Formula (III), both of p1 and p2 are preferably 2.

The preferred specific example of the acylphosphine oxide base photopolymerization initiator represented by Formula (III) is shown below, but shall not specifically be restricted to it:

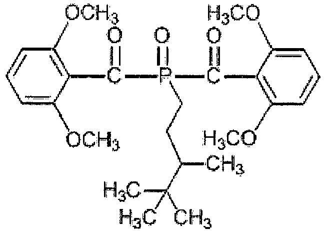

The photopolymerization initiator of the component (B) comprises the two kinds described above since the light-emitting element sealant obtained by using the photocurable resin composition containing the above photopolymerization initiators is very excellent in an optical transparency. It has become clear that cured matters obtained from photocurable resin compositions comprising other photopolymerization initiators, for example, benzyl methyl ketal, α-aminoalkylphenone base photopolymerization initiators, oxyphenylacetic acid ester base photopolymerization initiators are poor in an optical transparency and that they are not useful as light-emitting element sealants.

However, the photocurable resin composition of the present invention may contain the above other photopolymerization initiators as long as the effects of the present invention are not lost. When the above other photopolymerization initiators are contained, a content thereof is preferably 5 parts by mass or less, more preferably 3 parts by mass or less and further preferably 1 part by mass or less based on 100 parts by mass of the component (A) from the viewpoint of an optical transparency of the light-emitting element sealant.

### ((C) Reactive diluent)

The photocurable resin composition of the present invention may further contain a reactive diluent.

A liquid photocurable monovinyl monomer can be used as the reactive diluent. The reactive diluent reduces a viscosity of the photocurable resin composition and makes coating thereof easy, and it can be polymerized in optically curing the photocurable resin composition.

The reactive diluent includes, to be specific, vinyl esters such as vinyl acetate and the like, (meth)acryl monomers, N-vinyl monomers, polythiol compounds and the like.

The (meth)acryl monomers include, for example, n-butyl (meth)acrylate, 2-ethylhexyl (meth)acrylate, lauryl (meth)acrylate, isomyristyl (meth)acrylate, isostearyl (meth)acrylate, n-octadecyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, isobornyl (meth)acrylate, dicyclopentenyl (meth)acrylate and esters of (meth)acrylic acid and polyhydric alcohols.

The N-vinyl monomers include, for example, N,N-dimethylacrylamide, N-vinylpyrrolidone, N-vinylcaprolactam.

The polythiol compounds shall not specifically be restricted as long as they have 2 to 6 mercapto groups in a molecule, and they include, for example, aliphatic polythiols such as alkanedithiols having 2 to 20 carbon atoms; aromatic polythiols such as xylylenedithiol; polythiols obtained by substituting a halogen atom of halohydrin addition products of alcohols with a mercapto group; polythiols comprising hydrogen sulfide reaction products of polyepoxide compounds; and polythiols comprising ester compounds of polyhydric alcohols having 2 to 6 hydroxyl groups in a molecule with thioglycolic acid, β-mercaptopropionic acid or β-mercaptobutanoic acid.

When the component (C) is added to the photocurable resin composition, a content thereof is preferably 5 to 70 % by mass, more preferably 10 to 50 % by mass based on the photocurable resin composition.

### ((D) Additives)

The photocurable resin composition of the present invention may further contain various additives.

The additives include, for example, photosensitizers, inorganic fillers, thickeners, UV absorbers, antioxidants (age resisters) and carbodiimide compounds such as N,N'-diphenylcarbodiimide, N,N'-ethylcarbodiimide.

### -Photosensitizer-

Capable of being listed as the photosensitizer are, for example, amine compounds such as aliphatic amines, aromatic amines; ureas such as o-tolylthiourea; sulfur compounds such as sodium diethyl dithiophosphate, s-benzylisothiuronium p-toluenesulfonate; nitriles such as N,N-disubstituted-p-aminobenzonitrile compounds; phosphorus compounds such as tri-n-butylphosphine; other nitrogen compounds such as N-nitrosohydroxylamine derivatives.

### -Thickener-

Adding the thickener to the photocurable resin composition provides it with a thickening property and a thixotropy and can enhance a moldability. The above thickener includes inorganic thickeners and organic thickeners.

The inorganic thickener includes surface-treated fine powder silicas of wet silicas and dry silicas and natural mineral base thickeners such as organified bentonite. To be specific, it includes silica fine powders pulverized to finer powders by a dry method (for example, Aerosil 300, manufactured by Nippon Aerosil Co., Ltd.), fine powders obtained by modifying the above fine powders by trimethyldisilazane (for example, Aerosil RX300, manufactured by Nippon Aerosil C., Ltd.), fine powders obtained by modifying the fine powders described above by polydimethylsiloxane (for example, Aerosil RY300, manufactured by Nippon Aerosil C., Ltd.). An average particle diameter of the inorganic thickener is preferably 5 to 50 µm, more preferably 5 to 12 µm from the viewpoint of the thickening property and the transparency.

The organic thickener includes amide waxes, hydrogenated castor oil base thickeners, mixtures thereof. To be more specific, it includes hydrogenated castor oils (for example, ADVITROL 100 (manufactured by Süd-Chemie Catalysts Co., Ltd.), Dispalon (registered trade name) 305 (manufactured by Kusumoto Chemicals, Ltd.)) which are hydrogenated products of castor oil (a principal component is non-drying oil of ricinoleic acid)) and high grade amide waxes (for example, Dispalon (registered trade name) 6500 (manufactured by Kusumoto Chemicals, Ltd.)) which are products obtained by substituting hydrogen of ammonia with an acyl group.

### -UV absorber-

The UV absorber includes, for example, benzophenone base compounds, benzotriazole base compounds, benzoate base compounds, triazine base compounds, hydroxylamine base compounds.

### -Antioxidant-

The antioxidant includes, for example, phenol base antioxidants, sulfur base antioxidants, phosphorus base antioxidants.

Shown as the examples of the phenol base antioxidant are 2,6-di-t-butyl-p-cresol, butylated hydroxyanisole, 2,6-di-t-butyl-4-ethylphenol, stearyl β-(3,5-di-t-butyl-4-hydroxyphenyl)propionate, 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), 1,1,3-tris(2-methyl-4-hydroxy-5-t-butylphenylbutane), 1,3,5-trimethyl-2,4,6-tris(3,5-di-t-butyl-4-hydroxybenzyl)benzene, tetrakis-[methylene-3-(3',5'-di-t-butyl-4'-hydroxyphenyl)propionate]methane, bis[3,3'-bis-(4'-hydroxy-3'-t-butylphenyl)butylic acid] glycol ester, 1,3,5-tris(3',5'-di-t-butyl-4'-hydroxybenzyl)-S-triazine-2,4,6-(1H, 3H, 5H)trione, α-tocopherol.

Dilauryl 3,3'-thiodipropionate, dimyristyl 3,3'-thiodipropionate, distearyl 3,3'-thiodipropionate are shown as the examples of the sulfur base antioxidant. Further, shown as the examples of the phosphorus base antioxidant are triphenyl phosphite, diphenyl isodecyl phosphite, phenyl isodecyl phosphite, tris(nonylphenyl) phosphite, tris(2,4-di-t-butylphenyl) phosphite, 2,2'-methylenebis(4,6-di-t-butylphenyl) octyl phosphite.

When the additives (D) are added to the photocurable resin composition, a total content thereof shall not specifically be restricted as long as the effects of the present invention are not lost, and usually it is preferably 20 parts by mass or less, more preferably 10 parts by mass or less based on 100 parts by mass of the component (A).

The photocurable resin composition of the present invention can be obtained by mixing the component (A), the component (B) and, if necessary, the component (C), the component (D). The photocurable resin composition of the present invention is excellent in a heat resistance and an optical transparency and therefore is useful particularly as a light-emitting element sealant. A light-emitting element includes light-emitting diodes (LED) represented by organic electroluminescence devices and inorganic electroluminescence devices and laser diodes (LD) used as light sources of communications and optical discs.

### [Light-emitting element sealant]

The light-emitting element sealant can be produced by using the photocurable resin composition of the present invention. To be specific, the photocurable resin composition obtained by mixing well the components by means of a mixer such as, for example, a planetary mixer is coated on a part to be sealed in a light-emitting element, and it is cured by irradiating with an activation energy beam and turned into the light-emitting element sealant. The above activation energy beam includes a particle beam, an electromagnetic wave and mixtures thereof. The particle beam includes an electron beam (EB) and an α ray, and the electromagnetic wave includes a UV ray (UV), a visible ray, an infrared ray, a γ ray, an X ray. Among them, a UV ray is preferably used as the activation energy beam. A xenon lamp, a low pressure mercury lamp, a high pressure mercury lamp, a metal halide lamp, a microwave excimer lamp can be listed as a UV ray source.

The activation energy beam is preferably radiated under an inert gas atmosphere of a nitrogen gas, a carbon dioxide gas or an atmosphere of reducing an oxygen concentration, but curing can sufficiently be expedited under an ordinary aerial atmosphere. A radiation temperature thereof is preferably 10 to 200°C, and usually a radiation time thereof is preferably 10 seconds to 60 minutes. Usually, an integrated light quantity thereof is preferably 1,000 to 20,000 mJ/cm².

### EXAMPLES

Next, the present invention shall be explained in further details with reference to examples, but the present invention shall by no means be restricted by these examples.

### <Production Example 1> production of end-modified hydrogenated styrene-butadiene rubber

A reactor having a content volume of 7 L which was substituted with nitrogen was charged with 1.90 kg of dehydrated and refined cyclohexane, 2 kg of a 22 .9 mass % hexane solution of 1,3-butadiene, 0.573 kg of a 20.0 mass % cyclohexane solution of styrene and 130.4 ml of a 1.6 mol/L hexane solution of 2,2-di(tetrahydrofuryl)propane, and then 108.0 ml of a 0.5 mol/L dilithium polymerization initiator was added thereto to initiate polymerization. The mixed solution was heated up to 50°C to carry out the polymerization for 1.5 hour. Thereafter, 108.0 ml of a 1 mol/L cyclohexane solution of ethylene oxide was added thereto and further stirred for 2 hours, and then 50 ml of isopropyl alcohol was added thereto.

The hexane solution of the copolymer thus obtained was added to isopropyl alcohol to precipitate the copolymer, and it was sufficiently dried to obtain a styrene-butadiene rubber having a hydroxyl group at a molecular end (styrene content: 20 % by mass, weight average molecular weight: 18,000, molecular weight distribution: 1.15).

### (Hydrogenation treatment)

The styrene-butadiene rubber 120 g having a hydroxyl group at a molecular end which was obtained above was dissolved in 1 L of sufficiently dehydrated and refined hexane, and then a catalyst liquid of nickel naphthenate, triethylaluminum and butadiene (each 1 : 3 : 3 (mole ratio)) which was prepared in advance in a different vessel was added to the styrene-butadiene rubber described above so that 1 mol of nickel based on 1,000 mol of a constitutional unit originating in butadiene of the styrene-butadiene rubber was contained therein. The sealed reaction vessel was charged with hydrogen at 2.75 MPa (400 psi) under applied pressure to carry out hydrogenation reaction at 110°C for 4 hours.

Then, the catalyst residue was extracted and separated by hydrochloric acid of 3 mol/m³, and the solution was further subjected to centrifugal separation to settle and separate the catalyst residue. The hydrogenated styrene-butadiene rubber having a hydroxyl group at a molecular end was precipitated in isopropyl alcohol and sufficiently dried to obtain the hydrogenated styrene-butadiene rubber having a hydroxyl group at a molecular end (styrene content: 20 % by mass, weight average molecular weight: 16,500, hydrogen addition rate: 98 %, molecular weight distribution: 1.1).

### (Modification treatment of molecular end)

The hydrogenated styrene-butadiene rubber having a hydroxyl group at a molecular end thus obtained was dissolved in cyclohexane, and 2-acryloyloxyethyl isocyanate (Karenz (registered trade name) AOI, manufactured by Showa Denko K.K.) was slowly added thereto while stirring at 40°C and stirred further for 4 hours. Then, the crystal was precipitated in isopropyl alcohol to obtain an end-modified hydrogenated styrene-butadiene rubber.

### <Examples 1 to 4 and Comparative Examples 1 to 6>

The respective components were mixed in blend amounts (unit: parts by mass) shown in Table 1 and Table 2 by means of a planetary mixer to obtain photocurable resin compositions. Films were formed from the photocurable resin compositions thus obtained and irradiated with an activation energy beam to thereby obtain cured matters as test pieces.

A metal halide lamp (equipment name: SE-1500M, manufactured by Sen Engineering Co., Ltd.) was used as a light source of an activation energy beam, and the resin compositions were irradiated with a UV ray by means of a UV ray irradiation equipment (equipment name: UV1501BA-LT, manufactured by Sen Engineering Co., Ltd.) at an irradiance of 150 mW/cm² (wavelength: 320 to 390 nm) for 60 seconds under aerial atmosphere.

The test pieces (thickness: 1 mm or 2 mm) thus obtained were used to measure a light transmittance by the following method. The results thereof are shown in Table 1.

### (Measurement of light transmittance)

A UV visible spectrophotometer (equipment name: V-550, manufactured by JASCO Corporation) and an integrating sphere (ISV-470, manufactured by JASCO Corporation) were used to measure respectively a transmittance of light having a wavelength of 400 nm and a transmittance of light having a wavelength of 450 nm.

If a transmittance of light having a wavelength of 400 nm is 80 % or more particularly in the test piece having a thickness of 2 mm, it is useful as a light-emitting element sealant, and the higher light transmittance is more preferred.

**Table 1**

| | | Component (A) End-modified hydrogenated SBR*¹ | Component (B) Photopolymerization initiator*² | | Light transmittance (%)*³ | | Light transmittance (%)*⁴ | |
|---|---|---|---|---|---|---|---|---|
| | | | | | 400 nm | 450 nm | 400 nm | 450 nm |
| Example | 1* | 100 | a | 1 | 92.6 | 94.8 | 85.7 | 89.9 |
| | 2* | 100 | b | 1 | 92.2 | 94.9 | 85.1 | 90.1 |
| | 3 | 100 | c | 1 | 91.3 | 94.8 | 83.4 | 89.8 |
| | 4* | 100 | a | 10 | - | - | 81.1 | 87.2 |
| Comparative Example | 1 | 100 | d | 1 | 86.0 | 93.9 | 74.0 | 88.1 |
| | 2 | 100 | e | 1 | 54.7 | 82.8 | 29.9 | 68.5 |
| | 3 | 100 | f | 1 | 55.6 | 83.6 | 30.9 | 69.9 |
| | 4 | 100 | g | 1 | 84.8 | 94.2 | 72.0 | 88.7 |
| | 5 | 100 | h*⁵ | 1 | 84.7 | 93.4 | 71.7 | 87.2 |
| | 6 | 100 | a | 20 | - | - | 17.6 | 33.7 |

| | | | | | | | | |
|---|---|---|---|---|---|---|---|---|
| *1: end-modified hydrogenated styrene-butadiene rubber obtained in Production Example 1 *2: photopolymerization initiator having a structure shown below *3: test piece having a thickness of 1 mm was used *4: test piece having a thickness of 2 mm was used *5: Irgacure 754 mixture of 2-[2-oxo-2-phenylacetoxyethoxy]ethyl oxyphenylacetate and 2-(2-hydroxyethoxy)ethyl oxyphenylacetate (Examples marked * are incorporated by way of reference only) | | | | | | | | |

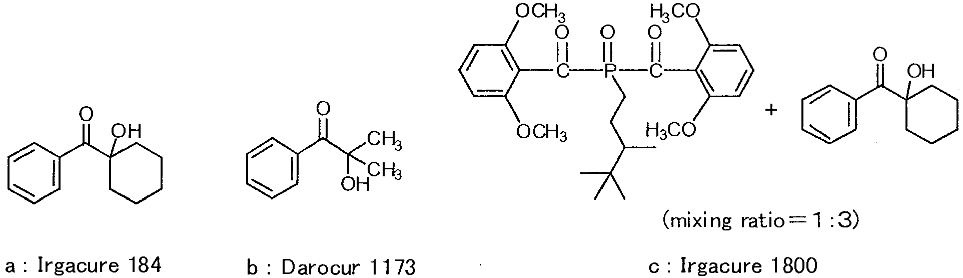

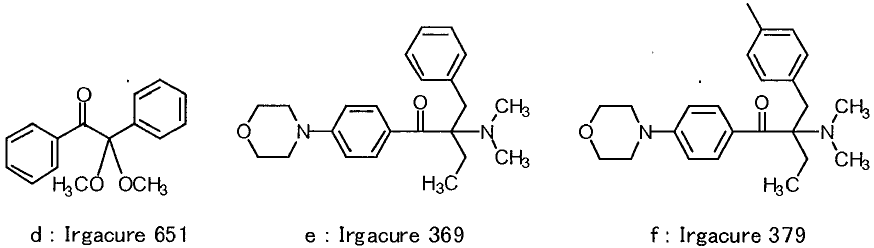

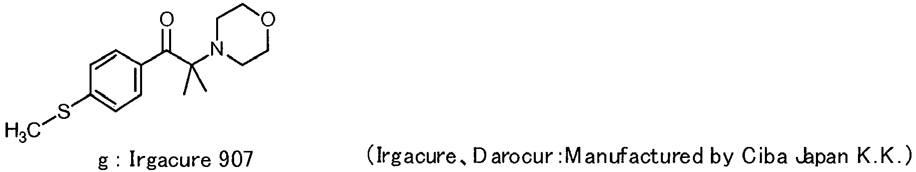

It can be found from the results shown in Table 1 that the cured matters obtained from the photocurable resin compositions of the present invention have a higher light transmittance than those of the cured matters obtained in the comparative examples and that even when the test piece having a thickness of 2 mm was used, they have a light transmittance of exceeding 80 % and are useful as a light-emitting element sealant.

A content of the component (B) was increased in Comparative Example 6, and it is considered that the component (B) was not dissolved completely, so that the light transmittance was reduced to a large extent.

### <Test Example 1 (*incorporated by way of reference only)> measurement of heat resistance

A light transmittance observed after holding the cured matter (thickness: 2 mm) of the photocurable resin composition obtained in Example 1 at 120°C for 100 hours or 1,000 hours and a transmittance of light having a wavelength of 400 nm observed after holding it at 150°C for 100 hours or 1000 hours were measured by the same method as described above to determine relative values thereof, wherein the initial value was set to 100, and the heat resistances of the cured matters obtained were evaluated. The results thereof are shown in Table 2.

A smaller reduction rate of the light transmittance observed when holding the cured matter at 120°C or 150°C shows that it is excellent in a heat resistance.

### <Comparative Test Example 1> measurement of heat resistance

A cured matter (thickness: 2 mm) was obtained in the same manner, except that in Example 1, urethane acrylate (Light Tack PUA-KH32M, manufactured by Kyoeisha Chemical Co., Ltd.) was used in place of the end-modified hydrogenated styrene-butadiene rubber of the component (A), and a heat resistance of the cured matter obtained was evaluated. The results thereof are shown in Table 2.

**Table 2**

| | | | | Component (B) Photopolymerization initiator | | Holding temperature (°C) | Holding time (hours) | Light transmittance (relative value: %) |
|---|---|---|---|---|---|---|---|---|
| | | | | | | | | 400 nm |
| Test Example 1* | 1 | Component (A) End-modified hydrogenated SBR | 100 | a | 1 | 120 | 100 | 95 |
| | | | | | | | 1,000 | 93 |
| | | | | | | 150 | 100 | 67 |
| | | | | | | | 1,000 | 57 |
| Comparative Test Example 1 | 1 | Urethane acrylate | 100 | a | 1 | 120 | 100 | 55 |
| | | | | | | | 1,000 | 31 |
| | | | | | | 150 | 100 | 1 |
| | | | | | | | 1,000 | 0 |

| | | | | | | | | |
|---|---|---|---|---|---|---|---|---|
| (*incorporated by way of reference only) | | | | | | | | |

It can be found from the results shown in Table 2 that the cured matters obtained by curing the photocurable resin compositions of the present invention are excellent in a heat resistance and useful as a light-emitting element sealant.

### INDUSTRIAL APPLICABILITY

The photocurable resin composition of the present invention is excellent in a heat resistance and an optical transparency, and therefore it is utilized for use in sealants for electronic displays such as organic electroluminescence devices and inorganic electroluminescence devices and use in light-emitting element sealants for back lights of electronic devices such as portable phones in which LED is used, digital video cameras, PDA and display parts of large-sized displays, road indicators and ordinary lighting equipments.

## Claims

1. A photocurable resin composition for a light-emitting element sealant comprising 100 parts by mass of an end-modified hydrogenated styrene-butadiene rubber (A) and
0.1 to 13 parts by mass of a photopolymerization initiator (B) comprising an α-hydroxyalkylphenone base photopolymerization initiator and an acylphosphine oxide base photopolymerization initiator of formula (III) 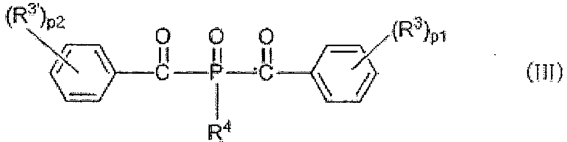 wherein R³ and R^{3'} each represent independently an alkyl group having 1 to 5 carbon atoms or an alkoxy group having 1 to 5 carbon atoms; R⁴ represents an alkyl group having 1 to 15 carbon atoms; p1 and p2 each represent independently an integer of 0 to 3.

2. The photocurable resin composition according to claim 1, wherein the end-modified hydrogenated styrene-butadiene rubber of the component (A) is a hydrogenated styrene-butadiene rubber having a (meth)acryloyloxy group at both ends of a molecule.

3. The photocurable resin composition according to claim 1 or 2, further comprising a (meth)acryl monomer and/or a polythiol compound as a reactive diluent (C).

4. A light-emitting element sealant prepared by using the photocurable resin composition according to any of claims 1 to 3.

## Patentansprüche

1. Lichthärtbare Harzzusammensetzung für ein Dichtungsmittel für lichtemittierende Elemente, umfassend
100 Masseteile eines endmodifizierten hydrierten Styrol-Butadien-Kautschuks (A) und
0,1 bis 13 Masseteile eines Photopolymerisationsinitiators (B), umfassend einen Photopolymerisationsinitiator auf α-Hydroxyalkylphenon-Basis und einen Photopolymerisationsinitiator auf Acylphosphinoxid-Basis der Formel (III) 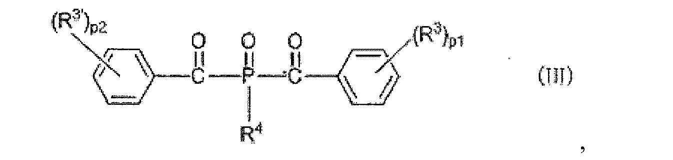 wobei R³ und R^{3'} jeweils unabhängig eine Alkylgruppe mit 1 bis 5 Kohlenstoffatomen oder eine Alkoxygruppe mit 1 bis 5 Kohlenstoffatomen darstellen; R⁴ eine Alkylgruppe mit 1 bis 15 Kohlenstoffatomen darstellt; p1 und p2 jeweils unabhängig eine ganze Zahl von 0 bis 3 darstellen.

2. Lichthärtbare Harzzusammensetzung nach Anspruch 1, wobei der endmodifizierte hydrierte Styrol-Butadien-Kautschuk der Komponente (A) ein hydrierter Styrol-Butadien-Kautschuk mit einer (Meth)acryloyloxy-Gruppe an beiden Enden eines Moleküls ist.

3. Lichthärtbare Harzzusammensetzung nach Anspruch 1 oder 2, weiterhin umfassend ein (Meth)acrylmonomer und/oder eine Polythiolverbindung als reaktives Verdünnungsmittel (C).

4. Dichtungsmittel für lichtemittierende Elemente, hergestellt durch Verwenden der lichthärtbaren Harzzusammensetzung nach einem der Ansprüche 1 bis 3.

## Revendications

1. Composition de résine photodurcissable pour joint d'étanchéité d'élément électroluminescent comprenant
100 parties en masse d'un caoutchouc de styrène-butadiène hydrogéné à extrémités modifiées (A) et
de 0,1 à 13 parties en masse d'un initiateur de photopolymérisation (B) comprenant un initiateur de photopolymérisation à base d'α-hydroxyalkylphénone et d'un initiateur de photopolymérisation à base d'oxyde d'acylphosphine de formule (III) 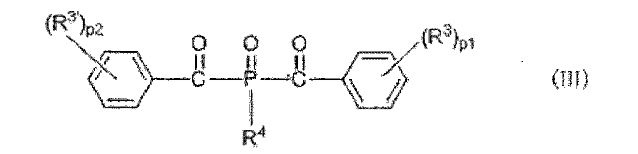 où R³ et R³' représentent chacun indépendamment un groupe alkyle ayant de 1 à 5 atomes de carbone ou un groupe alcoxy ayant de 1 à 5 atomes de carbone; R⁴ représente un groupe alkyle ayant de 1 à 15 atomes de carbone; p1 et p2 représentent chacun indépendamment un nombre entier d'une valeur de 0 à 3.

2. Composition de résine photodurcissable selon la revendication 1, où le caoutchouc de styrène-butadiène hydrogéné à extrémités modifiées du composant (A) est un caoutchouc de styrène-butadiène hydrogéné ayant un groupe (méth)acryloyloxy aux deux extrémités d'une molécule.

3. Composition de résine photodurcissable selon la revendication 1 ou 2, comprenant en outre un monomère (méth)acryle et/ou un composé polythiol comme diluant réactif (C).

4. Joint d'étanchéité d'élément électroluminescent préparé en utilisant la composition de résine photodurcissable selon l'une quelconque des revendications 1 à 3.
